## Europäisches Patentamt

## European Patent Office

## Office européen des brevets

(11) Veröffentlichungsnummer: **0 013 978**
**B1**

(12) # EUROPÄISCHE PATENTSCHRIFT

(45) Veröffentlichungstag der Patentschrift:
25.08.82

(21) Anmeldenummer: 80100334.4

(22) Anmeldetag: 23.01.80

(51) Int. Cl.³: **E 06 B 1/56,** B 60 J 1/10, **B 61 D 25/00**

(54) **Fenster, insbesondere für Schienenfahrzeuge.**

(30) Priorität: **24.01.79 AT 497/79**

(43) Veröffentlichungstag der Anmeldung:
**06.08.80 Patentblatt 80/16**

(45) Bekanntmachung des Hinweises auf die Patenterteilung:
**25.08.82 Patentblatt 82/34**

(84) Benannte Vertragsstaaten:
**CH DE FR IT NL SE**

(56) Entgegenhaltungen:
**DE-A-2 712 799**
**DE-B-1 605 913**
**DE-C-800 053**

(73) Patentinhaber: **Vereinigte Metallwerke Ranshofen-Berndorf AG, Wohllebengasse 9, A-1041 Wien IV (AT)**

(72) Erfinder: **Gemeinböck, Gerhard, Anton-Sattlergasse 115/17/7/23, A-1220 Wien (AT)**
Erfinder: **Rotter, Josef Helmut, Anton Afritschgasse 8/45, 2512 Tribuswinkel (AT)**

(74) Vertreter: **Hain, Leonhard, Dipl.-Ing., Tal 18/IV, D-8000 München 2 (DE)**

## Fenster, insbesondere für Schienenfahrzeuge

### Beschreibung

Die Erfindung betrifft ein Fenster, insbesondere für Schienenfahrzeuge, mit einem die Fensteröffnung innenseitig umgreifenden Fensterrahmen, aus dem die Fensterscheiben durch Lösen einer Klemmleiste im Notfall entfernbar sind, wobei das Fenster mit seinem Rahmen unter Zwischenlage einer als Dichtungsleiste ausgestalteten elastischen Einlage einseitig am Rand des Fensterausschnittes an der Fahrzeugwand anliegt und an dieser befestigt ist und wobei die Dichtungsleiste an der Fensteraußenseite vorgesehen ist.

An modernen Reise-Schienenfahrzeugen, die vollklimatisiert und für hohe Geschwindigkeiten ausgelegt sind, sind die Fenster nicht mehr zu öffnen, sondern besitzen meist nur kleine Ventilationsklappen. In Notfällen müssen die Isolierglasscheiben daher aus dem Rahmen gelöst werden, wozu eine eigene Innendichtung herausgerissen werden muß. Um diese Möglichkeit sicherzustellen, ist ein sehr sorgfältiger Zusammenbau des Fensters notwendig. Erfolgt dieser Zusammenbau, wie beim Fenster gemäß der DE-A-2 712 799, bei der Montage des Fensters in der Fahrzeugwand, so ergeben sich dabei nicht nur Nachteile in bezug auf die funktionelle Präzision, sondern es treten auch Glasbrüche und Undichtigkeiten infolge Ungenauigkeiten in den Passungen sowie übermäßige Verformungen an den Dichtungen auf. Ebenfalls ist der notwendige Arbeitsaufwand größer, weil auf einer Baustelle die Arbeitsverhältnisse in der Regel wesentlich ungünstiger als in Fabrikräumen sind. Ein anderes bekanntes Fenster (DE-C-800 053) ist zwar einbaufertig vorbereitet und daher ohne Schwierigkeiten in einen Fensterkasten einzusetzen. Dabei erfolgt die Abstützung und Abdichtung des Fensterrahmens gegenüber dem Fensterkasten mittels umlaufender Gummiprofile bzw. -einlagen. Diese Konstruktion führt zu einer weiten Zurückversetzung des Fensters gegenüber der Außenwand des Fahrzeuges. Dadurch wird die Bildung starker Windwirbel- und Strömungswiderstände begünstigt. Da die Fixierung des abdichtenden Gummiprofiles nur stellenweise gegeben ist, kann diese Halterung kräftigen Windstößen meist nicht standhalten. Weil außerdem Undichtigkeiten nicht ausgeschlossen sind, sind zum Auffangen des Regenwassers noch zusätzliche Flansche auf der Fahrzeuginnenseite notwendig.

Der Erfindung liegt daher die Aufgabe zugrunde, ein Fenster so auszubilden, daß es vollständig zusammengebaut und verglast in einfacher und sicherer Weise in die Fahrzeugwand einsetzbar ist und dabei den hohen Anforderungen eines mit hoher Geschwindigkeit fahrenden Schienenfahrzeuges genügt.

Zur Lösung dieser Aufgabe ist ein Fenster der eingangs genannten Art gemäß der Erfindung dadurch gekennzeichnet, daß die Dichtungsleiste in eine umlaufende Nut des durch den Fensterausschnitt in der Fahrzeugwand nach außen ragenden Teiles des Fensterrahmens eingreift, mit dem aus der Nut herausragenden Teil ihres Profiles an der Außenseite der Fahrzeugwand anliegt und dort mittels eines an der Fahrzeugwand angeschraubten oder angenieteten Leistenrahmens befestigt ist.

Diese Befestigungsart ermöglicht es, den schwierigen Zusammenbau des Fensters bereits in der Werkstätte in günstiger horizontaler Lage vorzunehmen und das bereits fertig zusammengebaute und verglaste Fenster in die Fahrzeugwand einzusetzen. Die Lagerung des Fensters ist elastisch und seine Befestigung zudem recht einfach, da es nur des Anbringens eines Leistenrahmens bedarf, um die Dichtungsleiste und damit den Fensterrahmen zu sichern. Ohne die Elastizität der Lagerung einzubüßen wird die Dichtungsleiste sowohl innen als auch nach außen fast vollständig abgedeckt und geschont. Die auf den ganzen Fensterumfang sich erstreckende Dichtungsleiste bietet einen ausreichenden Halt, so daß dieses Fenster auch den Anforderungen eines mit Höchstgeschwindigkeit fahrenden Schienenfahrzeuges genügt. Da dieses Fenster nur geringfügig aus der Außenfläche der Fahrzeugwand hervorsteht, ergeben sich strömungstechnisch günstige Verhältnisse.

Die Erfindung wird nachfolgend anhand eines Ausführungsbeispieles, das in einer Schnittzeichnung eines eingebauten Fensters dargestellt ist, näher beschrieben.

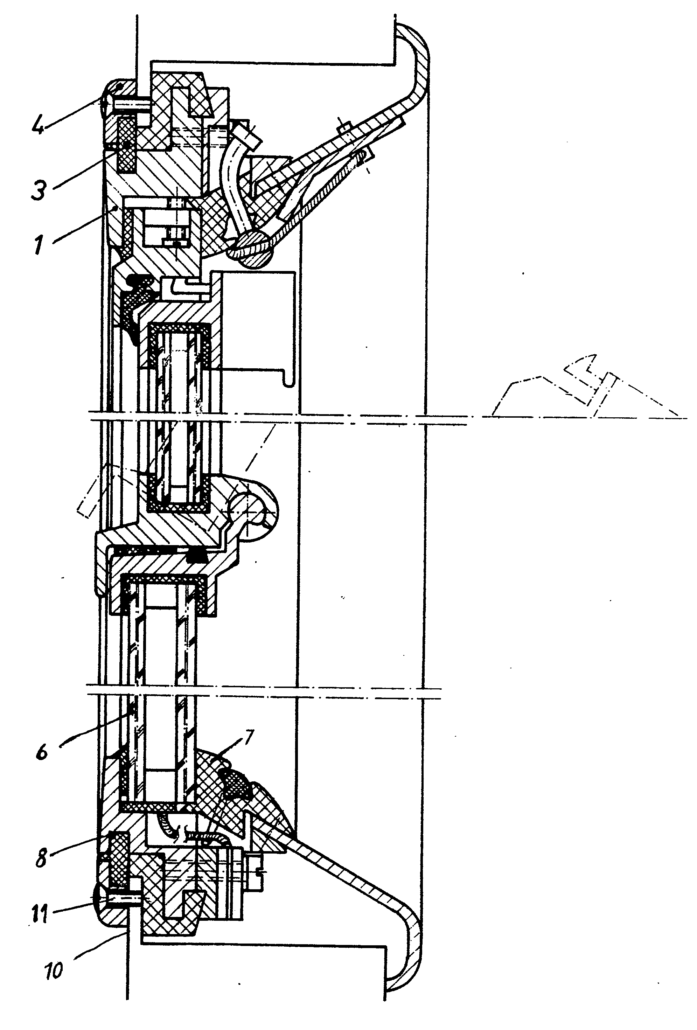

Wie der Zeichnung zu entnehmen ist, besteht das Fenster aus einem zweiteiligen Fensterrahmen 1, in den mittels einer für eine Notöffnung herausreißbaren Klemmleiste 7 eine Fensterscheibe 6, beispielsweise eine Isolierverglasung, eingesetzt ist. Der Fensterrahmen 1 besitzt an seiner Außenseite eine umlaufende Nut 8, in welche eine elastische Dichtungsleiste 3 nach dem Einschieben des Fensterrahmens in die Fahrzeugwand 10 eingesetzt wird. Diese Dichtungsleiste 3 überlappt die Fahrzeugwand 10 und wird an dieser mittels eines Leistenrahmens 4 befestigt, der die Dichtungsleiste 3 fast vollständig überdeckt und damit auch vor schädlicher UV-Strahlung schützt.

Das Fenster wird also in zusammengebautem Zustand in die Fahrzeugwand eingeschoben und mittels einiger Montageschraubplatten (nicht gezeigt), welche durch Flügelschrauben in Schraubenlöchern 11 der Fahrzeugwand 10 befestigt werden, in die richtige Position gebracht, d. h. die funktionelle Verspannung von 1 bis 1,5 mm wird durch die Dichtungsleiste 3, welche in die Nut des Fensterrahmens eingeschoben wird, fixiert und sodann gemeinsam mit dem Leistenrahmen geklemmt und zugleich gegen verschiedene Medien abgedichtet. Die halbrunden Montageschraubplatten passen in die Nuten des Fensterrahmens. Diese werden nach der Móntage wieder entfernt.

## Patentanspruch

Fenster, insbesondere für Schienenfahrzeuge, mit einem die Fensteröffnung innenseitig umgreifenden Fensterrahmen (1), aus dem die Fensterscheiben (6) durch Lösen einer Klemmleiste (7) im Notfall entfernbar sind, wobei das Fenster mit seinem Rahmen unter Zwischenlage einer als Dichtungsleiste (3) ausgestalteten elastischen Einlage einseitig am Rand des Fensterausschnittes an der Fahrzeugwand (10) anliegt und an dieser befestigt ist und wobei die Dichtungsleiste (3) an der Fensteraußenseite vorgesehen ist, dadurch gekennzeichnet, daß diese Dichtungsleiste (3) in eine umlaufende Nut (8) des durch den Fensterausschnitt in der Fahrzeugwand (10) nach außen ragenden Teiles des Fensterrahmens (1) eingreift, mit dem aus der Nut (8) herausragenden Teil ihres Profiles an der Außenseite der Fahrzeugwand (10) anliegt und dort mittels eines an der Fahrzeugwand (10) angeschraubten oder angenieteten Leistenrahmens (4) befestigt ist.

## Claim

Window, especially for rail vehicles, having a window frame (1) from which the window panes (6) may be removed in case of emergency by loosening a clamping band (7) and having a cover frame embracing the window-opening on the inside, said window with its frame and with the interlayer of a resilient insertion on one side abutting upon the edge of the window hollow in the vehicle wall ard being fixes thereto and a sealing strip (3) being provided on the outer surface of the window, characterized in that this sealing strip (3) engages in a surrounding groove (8) of that part of the window frame (1) which projects through the window hollow in the vehicle wall (10) to the outside, said sealing strip abuts upon the outer surface of the verhicle wall (10) with that part of its profile which protrudes from the groove (8) and is fastened· thereto by means of a clamping frame (4) screwed or riveted to the vehicle wall (10).

## Revendication

Fenêtre, en particulier pour véhicules sur rails, avec un cadre (1) dont les vitres (6) de la fenêtre peuvent être démontées en cas d'urgence par l'enlèvement d'un joc de serrage (7), et avec un cadre pare-soleil entourant intérieurement l'ouverture de la fenêtre, ladite fenêtre, avec son cadre et une couche élastique intercalaire, étant appliquée sur la bordure de la découpe de la fenêtre, contre la paroi du véhicule, et étant fixée à cette dernière, une barrette d'étanchéité (3) étant prévue à la face externe de ladite fenêtre, fenêtre caractérisée par le fait que cette barrette d'étanchéité (3) est engagée dans une gorge périphérique (8) de la partie du cadre (1) faisant saillie vers l'extérieur par la découpe de la fenêtre ménagée dans la paroi (10) du véhicule, ladite barrette étant appliquée contre la face externe de la paroi (10) du véhicule par la partie de son profilé saillant au-delà de la gorge (8), et étant fixée à cet endroit au moyen d'un encadrement de baguettes (4) vissé ou riveté à la paroi (10) du véhicule.